# FASCICULE DE BREVET EUROPEEN

(11) **EP 3 775 496 B1**
(45) Date de publication et mention de la délivrance du brevet: **17.07.2024**
(21) Numéro de dépôt: 19719571.2
(22) Date de dépôt: 02.04.2019
(51) Int. Cl.: F01D 5/08, F01D 11/24, F04D 29/58

(54) **TURBOMACHINE COMPORTANT UN DISPOSITIF D'AMELIORATION DU REFROIDISSEMENT DE DISQUES DE ROTOR PAR UN FLUX D'AIR**
TURBOMASCHINE MIT EINER VORRICHTUNG ZUR VERBESSERUNG DER KÜHLUNG VON ROTORSCHEIBEN DURCH EINEN LUFTSTROM
TURBOMACHINE COMPRISING A DEVICE FOR IMPROVING THE COOLING OF ROTOR DISCS BY AN AIR FLOW

(30) Priorité: 13.04.2018 FR 1853239
(43) Date de publication de la demande: 17.02.2021
(73) Titulaire: SAFRAN AIRCRAFT ENGINES, 75015 Paris (FR)
(72) Inventeur: SCHOLTES, Christophe, 77550 MOISSY-CRAMAYEL (FR)
(74) Mandataire: Gevers & Orès
(86) Numéro de dépôt international: PCT/FR2019/050759
(87) Numéro de publication internationale: WO 2019/197750

(56) Documents cités:
- WO-A1-2015/050680
- GB-A- 836 952
- US-A1- 2016 024 927
- US-A1- 2016 069 193

## Description

### Domaine technique :

La présente invention se rapporte aux turbomachines d'aéronefs. Elle vise plus particulièrement le contrôle des jeux entre les rotors et les parties statiques, notamment dans les compresseurs et les turbines, lors du fonctionnement de la turbomachine.

### Etat de l'art :

L'état de la technique comprend notamment les documents WO-A1-2015/050680, US-A1-2016/069193, GB-A-836952 et US-A1-2016/024927.

Dans un compresseur comme dans une turbine, les jeux en sommet de roue mobile influent au premier ordre sur le rendement du moteur. Les jeux sont principalement la conséquence de phénomènes mécaniques et thermiques.

Les principaux phénomènes mécaniques sont : la déformation du rotor sous les efforts centrifuges, les effets des pressions de veine sur le rotor et le stator, des déplacements axiaux.

En ce qui concerne les phénomènes thermiques, on trouve la dilatation différentielle des pièces constitutives du rotor et du stator, en particulier dans le compresseur haute pression. Ces pièces ont généralement des coefficients de dilatation thermique différents et surtout une vitesse de déformation différente en raison d'un environnement différent. En général, les pièces stator, plus ventilées et moins massiques, réagissent plus rapidement que le disque du rotor dont l'inertie est principalement liée à la masse du pied de disque, peu ventilé. Cet écart de temps de réponse thermique provoque une forte ouverture des jeux de fonctionnement.

Sur certains moteurs, l'optimisation du rendement fait que le gradient de pression entre l'amont et l'aval du moteur qui active le débit d'air de refroidissement passant sous l'alésage des disques de rotor peut être faible à bas régime. Il en résulte un faible débit de l'écoulement de refroidissement à la base des disques rotor, ce qui induit de forts temps de réponse sur les points critiques pour les jeux. Les conséquences en sont une augmentation des usures des matériaux abradables et une augmentation des jeux dans le fonctionnement en mode croisière pour l'aéronef.

L'invention a pour but de proposer une solution pour réduire le temps de réponse thermique des disques de rotor, en particulier lorsque la conception du moteur implique un faible débit de l'air de refroidissement passant au pied des disques des rotors.

### Présentation de l'invention:

L'invention concerne une turbomachine d'aéronef selon la revendication 1, la turbomachine comportant au moins un élément tubulaire, tel qu'un arbre de rotor, et au moins une roue de rotor s'étendant autour dudit élément tubulaire et comportant un disque portant à sa périphérie externe une rangée annulaire d'aubes, ledit disque s'étendant à distance radiale h dudit élément tubulaire de façon à définir un espace annulaire d'écoulement d'un flux de gaz de refroidissement en fonctionnement. Ledit élément tubulaire comprend au moins une paroi annulaire s'étendant radialement vers l'extérieur et configurée pour dévier ledit flux de gaz afin qu'il passe sensiblement radialement entre le disque et cette paroi annulaire.

La paroi annulaire force l'écoulement sortant du rétrécissement formé par l'espace annulaire entre le disque et l'élément tubulaire à longer radialement la paroi du disque. Le rétrécissement entraîne une accélération locale de l'écoulement, donc une augmentation des coefficients d'échange thermique sur la portion de paroi du disque où l'écoulement est accéléré. La paroi annulaire force l'écoulement à avoir une composante radiale, avant ou après l'espace annulaire, donc à longer une partie de la paroi transversale du disque. Il augmente donc la surface d'échange pour l'écoulement accéléré par le rétrécissement de l'espace annulaire, ce qui améliore les transferts thermiques et donc permet de diminuer les jeux.

Selon l'invention, la paroi annulaire est portée spécifiquement par l'élément tubulaire, puisqu'une paroi annulaire portée par le disque peut présenter un risque d'amorcer et propager des criques dans le disque et réduire la durée de vie du disque.

De préférence, ladite paroi annulaire est située en aval dudit disque par rapport au sens découlement dudit flux.

En forçant l'écoulement sortant du rétrécissement à longer radialement le disque, on augmente la surface d'échange entre le disque et une partie accélérée du flux de gaz. On augmente ainsi le refroidissement du disque, ce qui permet de diminuer son inertie thermique, donc d'améliorer les jeux autour de la roue de rotor comportant ce disque.

Si l'on ne met une paroi annulaire derrière le disque d'une seule roue de rotor, on choisit de préférence celle qui est la plus critique au niveau des jeux de fonctionnement.

En modifiant la structure de l'écoulement, ce dispositif a aussi un effet bénéfique sur le refroidissement des disques de roues voisines, placés sur le parcours du même flux de gaz.

Ledit espace annulaire entre le disque et l'élément tubulaire a une dimension radiale h et ladite paroi annulaire a une dimension radiale H supérieure à h.

Ainsi, le passage du gaz de refroidissement comporte, après l'espace annulaire entre le disque et l'élément tubulaire, une portion en forme de disque comprise entre la paroi arrière du disque et la paroi annulaire d'où le gaz s'échappe radialement.

Selon l'invention, ledit espace annulaire entre le disque et l'élément tubulaire a une dimension radiale h et ladite paroi annulaire est située à une distance axiale J dudit disque, qui est inférieure à h.

La portion du passage du gaz derrière le disque de la roue qui est en forme de disque est dans ce cas plus étroite que le passage annulaire, ce qui, en forçant le gaz à accélérer, augmente les coefficients d'échange. Avantageusement, la distance axiale J est définie de manière à ce le nombre Mach de l'écoulement d'air reste inférieur à 0,3 dans l'espace annulaire du jeu axial.

Avantageusement, ladite paroi annulaire est formée d'une seule pièce avec ledit élément tubulaire.

Selon l'invention, ledit disque comporte un bulbe central comportant une paroi transversale sensiblement plane s'étendant en vis-à-vis de ladite paroi annulaire jusqu'à une distance radiale H2 de l'élément tubulaire, l'extension radiale H de la paroi annulaire étant sensiblement égale à H2.

Ainsi, l'écoulement radial est forcé à suivre toute la paroi transversale du bulbe, qui est la partie la plus massive du disque.

De préférence, au moins deux disques consécutifs de roue s'étendent autour dudit élément tubulaire, ladite paroi annulaire s'étendant entre les disques consécutifs en étant plus proche du disque amont que du disque aval par rapport au sens d'écoulement dudit flux.

De manière surprenante, l'effet d'accélération bénéfique engendré par la paroi annulaire près du disque amont s'étend jusqu'au disque aval.

Avantageusement, au moins un disque s'étend en amont dudit disque par rapport au sens d'écoulement dudit flux, ledit disque en amont s'étendant à distance radiale dudit élément tubulaire supérieure à la distance radiale h entre ledit disque et ledit élément tubulaire.

En plaçant la paroi annulaire au niveau du disque le plus proche radialement de l'élément tubulaire, on place celle-ci près d'un col pour l'écoulement du fluide de refroidissement et l'on s'aperçoit que cela entraîne une accélération générale autour dudit disque, qui conserve un effet bénéfique pour les échanges thermiques sur le disque en amont.

Selon un autre mode de réalisation de l'invention, ledit élément tubulaire comprend en outre une seconde paroi annulaire s'étendant radialement vers l'extérieur et configurée pour dévier ledit flux de gaz afin qu'il passe sensiblement radialement entre le disque et cette seconde paroi annulaire.

Ladite seconde paroi annulaire peut s'étendre entre les disques consécutifs en étant plus proche du disque aval que du disque amont par rapport au sens d'écoulement dudit flux.

Le disque aval peut comprendre un bulbe central comportant une paroi transversale sensiblement plane s'étendant en vis-à-vis de ladite seconde paroi annulaire jusqu'à une distance radiale H2' de l'élément tubulaire, l'extension radiale H' de la seconde paroi annulaire étant sensiblement égale à H2'.

La distance radiale H2' entre le bulbe central du disque aval et l'élément tubulaire peut être supérieure à la distance radiale H2 entre le bulbe central du disque amont et ledit élément tubulaire.

L'espace annulaire entre le disque aval et l'élément tubulaire peut avoir une dimension radiale h' et en ce que ladite seconde paroi annulaire est disposée à une distance axiale J' dudit disque aval, qui est inférieure à h'.

La distance axiale J' de la seconde paroi annulaire peut être égale ou supérieure à la distance axiale J de la paroi annulaire.

Ledit élément tubulaire peut être un fourreau ou un tirant.

Ledit élément tubulaire peut appartenir à un premier corps tournant, par exemple basse pression, et ledit au moins un disque peut appartenir à un deuxième corps tournant, par exemple haute pression.

### Brève description des figures :

La présente invention sera mieux comprise et d'autres détails, caractéristiques et avantages de la présente invention apparaîtront plus clairement à la lecture de la description qui suit, en référence aux dessins annexés sur lesquels :
La figure 1 représente une demi coupe axiale d'un moteur concerné par l'invention, entre le compresseur haute pression et la turbine basse pression.
La figure 2 représente le contour de la demi coupe axiale d'une cavité représentant schématiquement, pour un compresseur ressemblant à celui de la figure 1, l'espace radialement interne aux extrémités internes des disques de rotors, dans lequel circule l'écoulement de refroidissement.
La figure 3 représente un détail de la figure 2, au niveau d'un obstacle situé à proximité de bulbes en pied d'un disque.
La figure 4 représente des lignes de courant d'un flux d'air de refroidissement dans la cavité de la figure 2, venant d'une simulation par calcul,
La figure 5 représente une vue partielle et agrandie de deux obstacles situés entre deux disques consécutifs de rotor selon un second mode de réalisation de l'invention.

Les éléments de la turbomachine ayant les mêmes fonctionnalités sur les figures sont référencés avec les mêmes numéros.

### Description d'un mode de réalisation de l'invention :

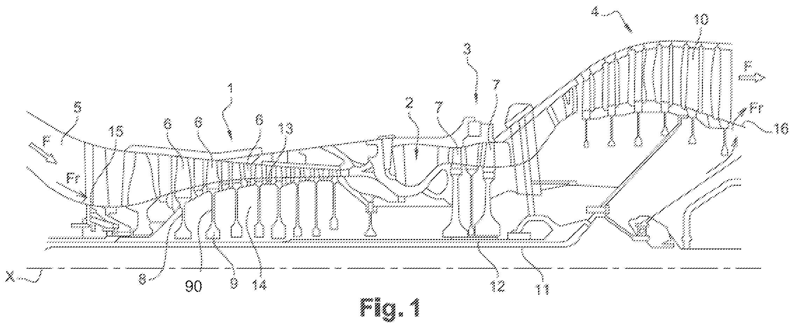

La figure 1 représente une partie des éléments de la turbomachine traversés par le flux primaire, en particulier le corps haute pression suivi de la turbine basse pression. Le corps haute pression comprend ici un compresseur haute pression 1, une chambre de combustion 2 et une turbine haute pression 3. Le gaz du flux primaire F sortant de la turbine haute pression 3 entraîne la turbine basse pression 4. Le flux primaire F arrive dans le compresseur haute pression 1 par une veine annulaire 5 qui le relie généralement à un compresseur basse pression placé en amont, ici non représenté. Le compresseur haute pression 1 comprend plusieurs roues de rotor 6 solidaires des roues de rotor 7 de la turbine haute pression 5 et tournant à une vitesse donnée ω1 autour de l'axe X du moteur.

Les roues de rotor 6 du compresseur haute pression 1, en particulier, comportent chacune un disque 8 qui porte à sa périphérie une rangée annulaire d'aubes travaillant dans le flux primaire F. Le disque 8 de chaque rotor est évidé en son centre et comporte généralement un bulbe annulaire 9 entourant l'orifice central. Le centre de gravité des roues de rotor 6 est ainsi proche de l'axe de rotation X mais les disques 8 présentent une inertie thermique importante due à la masse de leur bulbe central 9.

Les roues de rotors 10 de la turbine basse pression 4 tournent à une vitesse différente de la vitesse de rotation ω1 des roues de rotor 6 du corps haute pression. Elles entraînent un arbre basse pression 11 qui traverse le corps haute pression en passant radialement à l'intérieur du bulbe central 9 des disques 8 des roues de rotor 6 du corps haute pression, de manière à entraîner des éléments non représentés en amont, par exemple le compresseur basse pression. Ici, au niveau du compresseur haute pression 1, l'arbre basse pression 11 est entouré par un fourreau 12 ou un tirant qui l'isole. En général, ledit fourreau 12 tourne à la même vitesse que l'arbre basse pression 11 et a essentiellement la forme d'un cylindre de diamètre constant, inférieur au diamètre interne des bulbes 9, de manière à laisser un passage annulaire axial.

Les roues de rotor 6 successives du compresseur haute pression 1 délimitent, en périphérie de leurs disques 8, la paroi extérieure 13 d'une cavité annulaire 14 qui se trouve radialement sous la veine d'écoulement primaire F. La paroi radialement intérieure de la cavité 14 est définie par le fourreau 12 qui tourne ici à une vitesse différente de celle ω1 des disques 8a à 8d, par exemple à la vitesse du corps basse pression. Un écoulement d'air Fr de refroidissement des disques 8 des roues de rotor 6 circule dans cette cavité annulaire 14. Le circuit de cet écoulement de refroidissement comporte une entrée 15 correspondant à un prélèvement dans le flux primaire F dans la veine 5, en amont du compresseur haute pression 1. En aval, le circuit comporte une sortie 16 formant un échappement dans le circuit primaire F, derrière la turbine basse pression 4.

Le débit de l'air de refroidissement Fr qui circule d'amont en aval dans ce circuit en traversant des cavités annulaires successives, dont celle 14 décrite précédemment, est une fonction à pente positive de l'écart de pression entre l'entrée 15 et la sortie 16. L'efficacité de refroidissement des disques 8 des roues de rotor 6, notamment dans le compresseur 1, augmente si le débit d'air de refroidissement Fr augmente. Par contre les pertes de charge créées par les obstacles dans le circuit limitent le débit d'air de refroidissement.

Plus particulièrement, le disque 8 de chaque roue de rotor 6 comprend donc un pied en forme de bulbe 9 et une portion annulaire 90 (appelée aussi « âme annulaire »). Le bulbe 9 est disposé dans la cavité 14 du côté du fourreau 12. La cavité 14 comprend un espace annulaire, de plus petit diamètre, délimité par le bulbe 9 et le fourreau 12, d'une distance radiale h. L'âme annulaire 90 s'étend sensiblement transversalement d'une paroi externe 13, en périphérie du disque, vers l'espace annulaire. L'âme annulaire 90 est configurée pour supporter la rangée annulaire d'aubes. Le bulbe 9 est intégral avec l'âme annulaire 90.

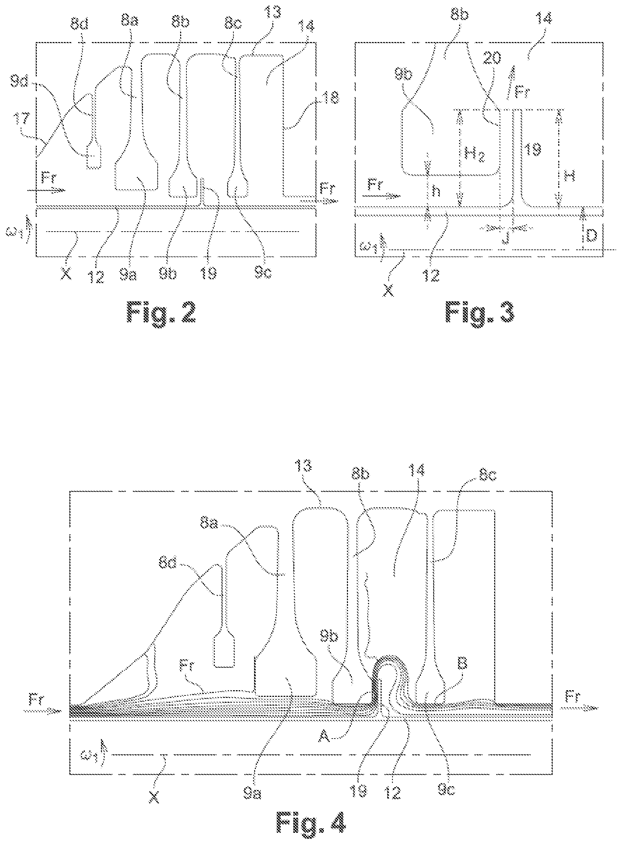

Un mode de réalisation de l'invention est schématiquement représenté sur les figures 2 et 3 pour améliorer le coefficient d'échange thermique entre l'air de refroidissement Fr et un ou plusieurs disques 8 de rotors. La cavité 14 représentée sur ces figures est une schématisation de celle représentée dans un compresseur haute pression 1 sur la figure 1, en vue d'effectuer des simulations numériques pour évaluer les phénomènes. Ici, on considère une cavité 14 avec les disques de rotor 8a, 8b, 8c et 8d. La cavité annulaire 14 est limitée radialement vers l'extérieur par la paroi 13 formée par des éléments portés par les disques 8a à 8d de rotor, près de leur périphérie. Une paroi amont 17 et une paroi aval 18, tournant à la même vitesse ω1 que les disques 8a à 8d, ferment axialement la cavité annulaire 14 en laissant respectivement une ouverture d'entrée annulaire et une ouverture de sortie annulaire pour l'air de refroidissement Fr. Les diamètres extérieurs des ouvertures d'entrée et de sortie sont du même ordre que les diamètres des ouvertures centrales dans les bulbes 9a-c des disques 8a-c. La paroi externe 13 comprend un diamètre variable selon la position du disque 8 par rapport à l'écoulement d'air Fr. Sur la figure 2, le diamètre de la paroi externe 13 augmente progressivement du disque 8d proche de la paroi amont 17 et jusqu'au disque 8c proche de la paroi aval 18.Le diamètre maximal de la paroi externe 13 est donc très important par rapport au diamètre des ouvertures centrales dans les bulbes 9a à 9d des disques 8a à 8d. Ici, le disque 8b est celui dont l'ouverture est minimale, elle est en particulier plus faible que celle du disque 8a, en amont, et du disque 8c, en aval.

La paroi radialement interne de la cavité annulaire 14 est formée par le fourreau 12. Sa forme est celle d'un cylindre de rayon donné D, traversant la cavité 14 de son entrée à sa sortie et portant à sa surface un obstacle annulaire 19 en forme de disque d'extension radiale H, placé ici derrière le troisième disque 8b en partant de l'entrée. Ledit obstacle annulaire 19 est solidaire du fourreau 12, donc entraîné en rotation avec lui.

Le fourreau 12 et les disques 8a-c de rotor séparent la cavité 14 en une série de sous-cavités reliées par des passages annulaires de section étroite, ménagés entre les bulbes 9a-c et le fourreau 12, passages dans lesquels l'air de refroidissement Fr est accéléré et le coefficient d'échange important. L'air circulant dans la cavité annulaire refroidit donc en priorité les bulbes 9a-c des disques 8a-c, ce qui est recherché puisque ce sont les parties les plus massives des disques.

En référence à la figure 2, la différence de diamètre entre l'ouverture centrale du bulbe 9b du troisième disque 8b définit un passage annulaire autour du fourreau 12 d'extension radiale h égale à la différence des diamètres.

Sur l'exemple des figures 2 et 3, l'obstacle 19 en forme de disque est placé derrière le troisième disque 8b de rotor à une distance axiale faible J de la paroi transversale arrière du bulbe 9b. L'obstacle pourrait en variante être placé indifféremment derrière chacun des disques du compresseur HP. L'extension radiale H du disque de l'obstacle 19 sur la paroi cylindrique du fourreau 12 est supérieure à l'extension radiale h du passage annulaire entre le fourreau 12 et le bulbe central 9b du disque 8b. L'obstacle 19 en forme de disque crée donc un passage radial derrière le bulbe central 9b du disque 8b, passage dans lequel le flux d'air de refroidissement Fr s'échappe radialement en léchant la paroi transversale arrière du bulbe 9b du disque 8b.

Le jeu axial J entre le disque de l'obstacle 19 et la paroi arrière du bulbe 9b du disque 8b est plus faible que l'épaisseur radiale h de l'espace annulaire entre le bulbe 9b et le fourreau 12. Plus particulièrement, le jeu axial J de l'obstacle 19 représente entre 1/4 et 1/10 de la distance radiale H2 de l'obstacle, tout en s'assurant que le jeu axial J ne dépasse pas l'épaisseur radiale h de l'espace annulaire entre le bulbe 9b et le fourreau 12. Sur la figure 3, l'obstacle 19 est disposé à un jeu axial J sensiblement de 1/5 par rapport à la distance radiale H2. De la sorte, l'air s'échappant radialement est accéléré et refroidit plus efficacement le bulbe central 9b.

Sur l'exemple, le bulbe central 9b est limité axialement par une paroi transversale plane 20 qui s'étend radialement jusqu'à une distance H2 du fourreau 12. Avantageusement, l'extension radiale H du disque de l'obstacle 19 est sensiblement égale à la distance H2, de manière à former une espace d'échappement radial de l'air de refroidissement formant un disque qui longe la paroi transversale 20. Ainsi, le débit d'air accéléré refroidit une portion maximale du bulbe central 9b du disque 8b.

La figure 4 illustre le phénomène obtenu en montrant des lignes de courant de l'écoulement d'air de refroidissement Fr obtenues par calcul sur la configuration des figures 2 et 3. La concentration des lignes aux points A et B montre que les échanges thermiques sont importants pour le troisième disque 8b de rotor mais aussi pour le disque 8c qui le suit.

Le résultat de calcul montre aussi que la présence de l'obstacle 19 ne désorganise pas l'écoulement en amont qui continue à refroidir correctement le disque 8a qui précède. On notera ici que la distance radiale du disque 8a au fourreau 12 est plus grande que la distance radiale h du disque 8b au fourreau 12. La perturbation de l'écoulement par l'obstacle 19 est donc faite au niveau d'un col pour le parcours de l'écoulement de refroidissement Fr.

Cet exemple de réalisation montre que la présence de l'obstacle 19 n'augmente pas fortement les pertes de charges et permet donc d'augmenter les coefficients d'échanges avec les disques 8a-c de rotor en accélérant le flux d'air Fr à proximité des bulbes centraux 9a-c de ces derniers. La vitesse de rotation de l'obstacle 19 embarqué sur le fourreau 12 est différente de la vitesse de rotation des disques 8a à 8d qui tournent par exemple à la vitesse du corps basse pression. Ce différentiel de vitesse de rotation influence favorablement le résultat en ce qui concerne les pertes de charge d'écoulement dans le jeu axial de valeur J.

Les calculs des inventeurs montrent toutefois que pour minimiser les pertes de charges, il est préférable de respecter deux conditions au niveau du jeu J axial.

La première condition, décrite précédemment, est que le jeu axial J est plus faible que l'épaisseur radiale h de l'espace annulaire entre le bulbe et le fourreau.

La seconde condition est que le nombre de Mach de l'écoulement d'air reste inférieur à 0,3 dans l'espace annulaire du jeu J axial.

Pour cette condition, on définit la quantité K= R*T/γ, où R est la constante des gaz parfaits, T la température de l'air au niveau du jeu axial J et γ est le coefficient de Laplace ou indice adiabatique. Selon cette deuxième condition, la section de passage dans le jeu axial J doit rester inférieure à la racine carrée de la quantité K, multipliée par le débit d'air de refroidissement Fr dans la cavité 14 et divisée par 0,3 fois la pression de l'air au niveau du jeu axial J.

La position de l'obstacle 19 sur les figures 2 à 4 présente un bon compromis entre l'augmentation des coefficients d'échanges pour les disques 8a-c de rotor sur la configuration présentée. L'invention ne se limite cependant pas à la configuration présentée. On peut faire varier les dimensions de l'obstacle 19 en s'appuyant sur les considérations indiquées précédemment, voire mettre des obstacles derrière plusieurs disques. Le choix du nombre d'obstacles, de leur taille et du positionnement dépendra de la configuration de la turbomachine et du compromis recherché.

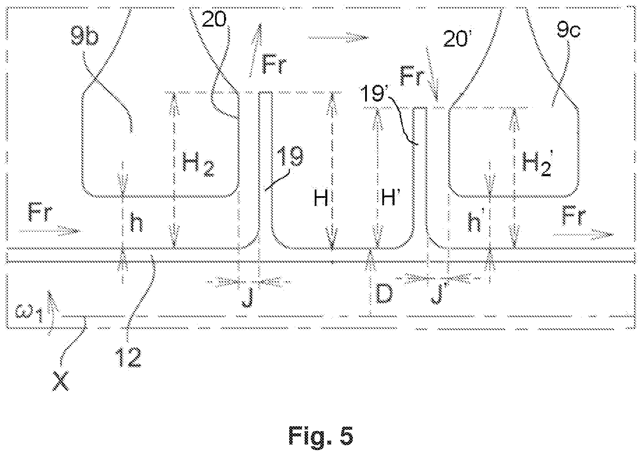

La figure 5 illustre un second mode de réalisation, dans lequel deux obstacles 19, 19' sont portés par le fourreau 12 et s'étendent radialement vers l'extérieur entre deux disques consécutifs, respectivement disque amont 8b et disque aval 8c. Le premier obstacle 19 correspond à l'obstacle décrit ci-dessus, c'est-à-dire qu'il est placé à un jeu axial J derrière la paroi transversale arrière 20 du bulbe amont 9b avec la distance radiale H2 du fourreau 12. Cette distance radiale H2 de la paroi transversale arrière 20 correspond à la distance radiale H du premier obstacle 19. Le second obstacle 19' est disposé sensiblement à un jeu axial J' devant la paroi transversale avant 20' du bulbe aval 9c. Cette paroi transversale avant 20' s'étend radialement jusqu'à une distance H2' du fourreau 12. Avantageusement, l'extension radiale H' du second obstacle 19' est sensiblement égale à la distance H2', de manière à former un espace d'échappement radial de l'air de refroidissement formant un disque qui longe et affleure la paroi transversale avant 20' du disque aval 8c. Ces deux obstacles permettent au débit d'air accéléré de refroidir une portion maximale à la fois du bulbe amont 9b et celui du bulbe aval 9c.

Avantageusement, le bulbe aval 8c s'étend à une distance radiale h' du fourreau 12 qui est supérieure à la distance h entre le bulbe amont 9b et le fourreau 12, de sorte que la distance H2 de la paroi transversale arrière 20 du bulbe 9b est supérieure à celle H2' de la paroi transversale avant 20' du bulbe aval 9c. Par conséquent, la distance H du premier obstacle 19 est supérieure à celle H' du second obstacle 19'.

De préférence, le jeu axial J' du second obstacle 19' est au moins égal au jeu axial J du premier obstacle 19. Par exemple, le jeu axial J' est similaire ou supérieur de deux à quatre fois le jeu axial J, tout en assurant que le jeu axial J' ne dépasse pas l'épaisseur radiale h' de l'espace annulaire entre le bulbe 9c et le fourreau 12. Sur la figure 5, le jeu axial J du premier obstacle 19 est identique au jeu axial J' du second obstacle 19'. De cette façon, le flux d'air de refroidissement Fr s'échappant radialement est également re-accéléré et refroidit plus efficacement le bulbe aval 9c du disque aval 8c.

L'utilisation de deux obstacles entre deux disques consécutifs augmente le coefficient d'échange thermique simultanément de deux portions de parois de disques consécutifs où l'écoulement est accéléré, de façon à améliorer les jeux en sommet du fourreau. Ceci permet également de réduire d'avantage le temps de réponse thermique des disques amont 9b et aval 9c, tout en générant peu de pertes de charges associées.

## Revendications

1. Turbomachine d'aéronef, comportant au moins un élément tubulaire (12), tel qu'un arbre de rotor, et au moins une roue (6) de rotor s'étendant autour dudit élément tubulaire (12) et comportant un disque (8b) portant à sa périphérie externe une rangée annulaire d'aubes, ledit disque (8b) s'étendant à distance radiale h dudit élément tubulaire (12) de façon à définir un espace annulaire d'écoulement d'un flux de gaz de refroidissement (Fr) en fonctionnement, ledit élément tubulaire (12) comprenant au moins une paroi annulaire (19) s'étendant radialement vers l'extérieur et configurée pour dévier ledit flux de gaz (Fr) afin qu'il passe sensiblement radialement entre le disque (8b) et cette paroi annulaire (19) ; ledit disque (8b) comprenant un bulbe central (9b) comportant une paroi transversale (20) sensiblement plane s'étendant en vis-à-vis de ladite paroi annulaire (19) jusqu'à une distance radiale H2 de l'élément tubulaire (12), **caractérisée en ce que** l'extension radiale H de la paroi annulaire (19) est sensiblement égale à H2, et **en ce que** ledit espace annulaire entre le disque (8b) et l'élément tubulaire (12) a une dimension radiale h et **en ce que** ladite paroi annulaire (19) est située à une distance axiale J dudit disque (8b), qui est inférieure à h.

2. Turbomachine selon la revendication précédente, **caractérisée en ce que** ladite paroi annulaire (19) est située en aval dudit disque (8b) par rapport au sens découlement dudit flux (Fr).

3. Turbomachine selon la revendication 1 ou 2, **caractérisée en ce que** ledit espace annulaire entre le disque (8b) et l'élément tubulaire (12) a une dimension radiale h et **en ce que** ladite paroi annulaire (19) a une dimension radiale H supérieure à h.

4. Turbomachine selon l'une des revendications précédentes, **caractérisée en ce que** ladite paroi annulaire (19) est formée d'une seule pièce avec ledit élément tubulaire (12).

5. Turbomachine selon l'une des revendications précédentes, **caractérisée en ce qu'**au moins deux disques (8b, 8c) consécutifs de roue s'étendent autour dudit élément tubulaire (12), ladite paroi annulaire (19) s'étendant entre les disques consécutifs en étant plus proche du disque amont (8b) que du disque aval (8c) par rapport au sens d'écoulement dudit flux (Fr).

6. Turbomachine selon l'une des revendications précédentes, en dépendance de la revendication 2, **caractérisée en ce qu'**au moins un disque (8a) s'étend en amont dudit disque (8b) par rapport au sens d'écoulement dudit flux (Fr), ledit disque (8a) en amont s'étendant à distance radiale dudit élément tubulaire (12) supérieure à la distance radiale h entre ledit disque (8b) et ledit élément tubulaire (12).

7. Turbomachine selon l'une des revendications précédentes, **caractérisée en ce que** ledit élément tubulaire (2) comprend en outre une seconde paroi annulaire (19') s'étendant radialement vers l'extérieur et configurée pour dévier ledit flux de gaz (Fr) afin qu'il passe sensiblement radialement entre le disque (8c) et cette seconde paroi annulaire (19').

8. Turbomachine selon la revendication 7, **caractérisée en ce que** ladite seconde paroi annulaire (19') s'étend entre les disques consécutifs (8b, 8c) en étant plus proche du disque aval (8c) que du disque amont (8b) par rapport au sens d'écoulement dudit flux (Fr).

9. Turbomachine selon la revendication 7 ou 8, **caractérisée en ce que** le disque aval (8c) comprend un bulbe central (9c) comportant une paroi transversale (20') sensiblement plane s'étendant en vis-à-vis de ladite seconde paroi annulaire (19') jusqu'à une distance radiale H2' de l'élément tubulaire (12), l'extension radiale H' de la seconde paroi annulaire (19') étant sensiblement égale à H2'.

10. Turbomachine selon la revendication 9, **caractérisée en ce que** la distance radiale H2' entre le bulbe central (9c) du disque aval (8c) et l'élément tubulaire (12) est supérieure à la distance radiale H2 entre le bulbe central (9b) du disque amont (8b) et ledit élément tubulaire (12).

11. Turbomachine selon l'une des revendications 8 à 10, **caractérisée en ce que** l'espace annulaire entre le disque aval (8c) et l'élément tubulaire (12) a une dimension radiale h' et **en ce que** ladite seconde paroi annulaire (19') est disposée à une distance axiale J' dudit disque aval (8c), qui est inférieure à h'.

12. Turbomachine selon la revendication 11, **caractérisée en ce que** la distance axiale J' de la seconde paroi annulaire (19') est égale ou supérieure à la distance axiale J de la paroi annulaire (19).

13. Turbomachine selon l'une des revendications précédentes, **caractérisée en ce que** ledit élément tubulaire (12) est un fourreau ou un tirant.

14. Turbomachine selon l'une des revendications précédentes, **caractérisée en ce que** ledit élément tubulaire (12) appartient à un premier corps tournant, par exemple basse pression, et ledit au moins un disque (8b) appartient à un deuxième corps tournant, par exemple haute pression.

## Patentansprüche

1. Turbomaschine eines Luftfahrzeugs, das mindestens ein rohrförmiges Element (12), wie etwa eine Rotorwelle, und mindestens ein Rotorrad (6) umfasst, das sich um das rohrförmige Element (12) herum erstreckt und eine Scheibe (8b) umfasst, die an ihrem Außenumfang eine ringförmige Schaufelreihe trägt, wobei sich die Scheibe (8b) in radialem Abstand h vom rohrförmigen Element (12) so erstreckt, dass sie im Betrieb einen ringförmigen Strömungsraum für einen Kühlgasstrom (Fr) definiert, wobei das rohrförmige Element (12) mindestens eine ringförmige Wand (19) umfasst, die sich radial nach außen erstreckt und so konfiguriert ist, dass sie den Gasstrom (Fr) umlenkt, damit er im Wesentlichen radial zwischen der Scheibe (8b) und dieser ringförmigen Wand (19) verläuft; wobei die Scheibe (8b) einen zentralen Bulbus (9b) umfasst, der eine im Wesentlichen ebene Querwand (20) umfasst, die sich der ringförmigen Wand (19) zugewandt bis zu einem radialen Abstand H2 vom rohrförmigen Element (12) erstreckt, **dadurch gekennzeichnet, dass** die radiale Erstreckung H der ringförmigen Wand (19) im Wesentlichen gleich H2 ist, und dadurch, dass der ringförmige Raum zwischen der Scheibe (8b) und dem rohrförmigen Element (12) eine radiale Abmessung h aufweist und dadurch, dass sich die ringförmige Wand (19) in einem axialen Abstand J von der Scheibe (8b) befindet, der kleiner ist als h.

2. Turbomaschine nach dem vorstehenden Anspruch, **dadurch gekennzeichnet, dass** sich die ringförmige Wand (19) in Bezug auf die Strömungsrichtung des Stroms (Fr) stromabwärts der Scheibe (8b) befindet.

3. Turbomaschine nach Anspruch 1 oder 2, **dadurch gekennzeichnet, dass** der ringförmige Raum zwischen der Scheibe (8b) und dem rohrförmigen Element (12) eine radiale Abmessung h aufweist und dadurch, dass die ringförmige Wand (19) eine radiale Abmessung H aufweist, die größer ist als h.

4. Turbomaschine nach einem der vorstehenden Ansprüche, **dadurch gekennzeichnet, dass** die ringförmige Wand (19) einstückig mit dem rohrförmigen Element (12) gebildet ist.

5. Turbomaschine nach einem der vorstehenden Ansprüche, **dadurch gekennzeichnet, dass** sich mindestens zwei aufeinanderfolgende Radscheiben (8b, 8c) um das rohrförmige Element (12) herum erstrecken, wobei sich die ringförmige Wand (19) zwischen den aufeinanderfolgenden Scheiben erstreckt, wobei sie in Bezug auf die Strömungsrichtung des Stroms (Fr) näher an der stromaufwärtigen Scheibe (8b) als an der stromabwärtigen Scheibe (8c) liegt.

6. Turbomaschine nach einem der vorstehenden Ansprüche in Abhängigkeit von Anspruch 2, **dadurch gekennzeichnet, dass** sich mindestens eine Scheibe (8a) in Bezug auf die Strömungsrichtung des Stroms (Fr) stromaufwärts der Scheibe (8b) erstreckt, wobei sich die stromaufwärtige Scheibe (8a) in radialem Abstand vom rohrförmigen Element (12) erstreckt, der größer ist als der radiale Abstand h zwischen der Scheibe (8b) und dem rohrförmigen Element (12).

7. Turbomaschine nach einem der vorstehenden Ansprüche, **dadurch gekennzeichnet, dass** das rohrförmige Element (2) weiter eine zweite ringförmige Wand (19') umfasst, die sich radial nach außen erstreckt und so konfiguriert ist, dass sie den Gasstrom (Fr) umlenkt, damit er im Wesentlichen radial zwischen der Scheibe (8c) und dieser zweiten ringförmigen Wand (19') verläuft.

8. Turbomaschine nach Anspruch 7, **dadurch gekennzeichnet, dass** sich die zweite ringförmige Wand (19') zwischen den aufeinanderfolgenden Scheiben (8b, 8c) erstreckt, wobei sie in Bezug auf die Strömungsrichtung des Stroms (Fr) näher an der stromabwärtigen Scheibe (8c) als an der stromaufwärtigen Scheibe (8b) liegt.

9. Turbomaschine nach Anspruch 7 oder 8, **dadurch gekennzeichnet, dass** die stromabwärtige Scheibe (8c) einen zentralen Bulbus (9c) umfasst, der eine im Wesentlichen ebene Querwand (20') umfasst, die sich der zweiten ringförmigen Wand (19') zugewandt bis zu einem radialen Abstand H2' vom rohrförmigen Element (12) erstreckt, wobei die radiale Erstreckung H' der zweiten ringförmigen Wand (19') im Wesentlichen gleich H2' ist.

10. Turbomaschine nach Anspruch 9, **dadurch gekennzeichnet, dass** der radiale Abstand H2' zwischen dem zentralen Bulbus (9c) der stromabwärtigen Scheibe (8c) und dem rohrförmigen Element (12) größer ist als der radiale Abstand H2 zwischen dem zentralen Bulbus (9b) der stromaufwärtigen Scheibe (8b) und dem rohrförmigen Element (12).

11. Turbomaschine nach einem der Ansprüche 8 bis 10, **dadurch gekennzeichnet, dass** der ringförmige Raum zwischen der stromabwärtigen Scheibe (8c) und dem rohrförmigen Element (12) eine radiale Abmessung h' aufweist, und dadurch, dass die zweite ringförmige Wand (19') in einem axialen Abstand J' von der stromabwärtigen Scheibe (8c) angeordnet ist, der kleiner ist als h'.

12. Turbomaschine nach Anspruch 11, **dadurch gekennzeichnet, dass** der axiale Abstand J' der zweiten ringförmigen Wand (19') gleich oder größer ist als der axiale Abstand J der ringförmigen Wand (19).

13. Turbomaschine nach einem der vorstehenden Ansprüche, **dadurch gekennzeichnet, dass** das rohrförmige Element (12) eine Hülse oder ein Zugstab ist.

14. Turbomaschine nach einem der vorstehenden Ansprüche, **dadurch gekennzeichnet, dass** das rohrförmige Element (12) zu einem ersten, zum Beispiel Niederdruck-, Drehkörper gehört und die mindestens eine Scheibe (8b) zu einem zweiten, zum Beispiel Hochdruck-, Drehkörper gehört.

## Claims

1. An aircraft turbine engine, comprising at least one tubular element (12), such as a rotor shaft, and at least one rotor wheel (6) extending around said tubular element (12) and comprising a disk (8b) carrying at the external periphery of same, an annular row of blades, said disk (8b) extending at a radial distance h from said tubular element (12) in such a way as to define an annular flow space for a cooling gas stream (Fr) during operation, said tubular element (12) comprising at least one annular wall (19) extending radially outwards and configured to divert said gas stream (Fr) in order for it to pass substantially radially between the disk (8b) and said annular wall (19); said disk (8b) comprising a central bulb (9b) comprising a substantially planar transverse wall (20) extending opposite said annular wall (19) up to a radial distance H2 from the tubular element (12), **characterized in that** the radial extension H of the annular wall (19) being substantially equal to H2, and **in that** said annular space between the disk (8b) and the tubular element (12) has a radial dimension h and **in that** said annular wall (19) is located at an axial distance J from said disk (8b) which is less than h.

2. The turbine engine according to previous claim, **characterized in that** said annular wall (19) is located downstream of said disk (8b) with respect to the direction of flow of said stream (Fr).

3. The turbine engine according to claim 1 or 2, **characterized in that** said annular space between the disk (8b) and the tubular element (12) has a radial dimension h and **in that** said annular wall (19) has a radial dimension H greater than h.

4. The turbine engine according to one of the preceding claims, **characterized in that** said annular wall (19) is integrally formed with said tubular element (12).

5. The turbine engine according to one of the preceding claims, **characterized in that** at least two consecutive wheeldisks (8b, 8c) extend around said tubular element (12), said annular wall (19) extending between the consecutive disks being closer to the upstream disk (8b) than to the downstream disk (8c) with respect to the direction of flow of said stream (Fr).

6. The turbine engine according to one of the preceding claims, in dependence on claim 2, **characterized in that** at least one disk (8a) extends upstream of said disk (8b) with respect to the direction of flow of said stream (Fr), said upstream disk (8a) extending at a radial distance from said tubular element (12) greater than the radial distance h between said disk (8b) and said tubular element (12).

7. The turbine engine according to one of the preceding claims, **characterized in that** said tubular element (2) further comprises a second annular wall (19') extending radially outwards and configured to divert said gas stream (Fr) so that it passes substantially radially between the disk (8c) and this second annular wall (19').

8. The turbine engine according to claim 7, **characterized in that** said second annular wall (19') extends between consecutive disks (8b, 8c) being closer to the downstream disk (8c) than to the upstream disk (8b) with respect to the direction of flow of said stream (Fr).

9. The turbine engine according to claim 7 or 8, **characterized in that** the downstream disk (8c) comprises a central bulb (9c) comprising a substantially planar transverse wall (20') extending opposite said second annular wall (19') up to a radial distance H2' from the tubular element (12), the radial extension H' of the second annular wall (19') being substantially equal to H2'.

10. The turbine engine according to claim 9, **characterized in that** the radial distance H2' between the central bulb (9c) of the downstream disk (8c) and the tubular element (12) is greater than the radial distance H2 between the central bulb (9b) of the upstream disk (8b) and said tubular element (12).

11. The turbine engine according to one of claims 8 to 10, **characterized in that** the annular space between the downstream disk (8c) and the tubular element (12) has a radial dimension h' and **in that** said second annular wall (19') is arranged at an axial distance J' from said downstream disk (8c), which is smaller than h'.

12. The turbine engine according to claim 11, **characterized in that** the axial distance J' of the second annular wall (19') is equal to or greater than the axial distance J of the annular wall (19).

13. The turbine engine according to one of the preceding claims, **characterized in that** said tubular element (12) is a sleeve or a tie rod.

14. The turbine engine according to one of the preceding claims, **characterized in that** said tubular element (12) belongs to a first rotating body, for example low pressure, and said at least one disk (8b) belongs to a second rotating body, for example high pressure.
